# FASCICULE DE BREVET EUROPEEN

(11) **EP 3 010 730 B1**
(45) Date de publication et mention de la délivrance du brevet: **09.10.2019**
(21) Numéro de dépôt: 14738410.1
(22) Date de dépôt: 19.06.2014
(51) Int. Cl.: B60C 13/00

(54) **PNEUMATIQUE COMPORTANT UN MARQUAGE A FORT CONTRASTE**
REIFEN MIT EINER KONTRASTREICHEN MARKIERUNG
TIRE COMPRISING A HIGH-CONTRAST MARKING

(30) Priorité: 20.06.2013 FR 1355823
(43) Date de publication de la demande: 27.04.2016
(73) Titulaire: Compagnie Générale des Etablissements Michelin, 63000 Clermont-Ferrand (FR)
(72) Inventeur: BERGER, Eric, F-63040 Clermont-Ferrand Cedex 9 (FR); GARDARIN, Benoit, F-63040 Clermont-Ferrand Cedex 9 (FR); GUIMARD, Bruno, F-63040 Clermont-Ferrand Cedex 9 (FR); MUHLHOFF, Olivier, F-63040 Clermont-Ferrand Cedex 9 (FR); PETITJEAN, Sylvain, F-63040 Clermont-Ferrand Cedex 9 (FR)
(74) Mandataire: Demaure, Pierre-Yves
(86) Numéro de dépôt international: PCT/EP2014/062957
(87) Numéro de publication internationale: WO 2014/202729

(56) Documents cités:
- EP-A1- 0 611 668
- EP-A2- 2 204 296
- FR-A1- 2 950 552
- JP-A- 2008 201 384
- JP-A- 2012 183 869

## Description

### DOMAINE DE L'INVENTION

La présente invention concerne un pneumatique pour véhicule automobile comportant un marquage et une texture particulière entourant ce marquage.

### ETAT DE LA TECHNIQUE

Les flancs des pneumatiques présentent une grande quantité de marquages destinés à donner des informations techniques et légales ou à permettre aux consommateurs de distinguer l'origine du produit.

Il est constant d'essayer d'améliorer la visibilité et la lisibilité de ces marquages sur les flancs des pneumatiques,

Le document EP2204296 décrit une texture présente sur la surface externe d'un flanc de pneumatique. Cette texture comporte une pluralité de brins régulièrement répartis dans cette texture.

Le document US 2008/0283169 décrit un pneumatique en matériau caoutchoutique comprenant un flanc et un marquage formé sur ce flanc, Le marquage est disposé dans un logement réalisé en creux dans le flanc, Ce marquage est en protubérance par rapport au fond du logement de sorte qu'il bénéficie d'une bonne visibilité sur le flanc du pneumatique.

Le document JP2012183869 décrit un pneumatique présentant sur un flanc un marquage dans un logement. Le marquage est entouré par une texture sous forme de lamelles. Le document JP2008201384 montre aussi un pneumatique présentant sur un flanc un marquage dans un logement, qui est entouré par une surface pourvue d'une rugosité superficielle pour augmenter la visibilité du marquage.

Cependant, au cours d'un roulage, une grande quantité de boue ou de poussière peut se loger dans le logement diminuant en conséquence le contraste entre le marquage et le fond du logement.

Il existe donc un besoin de proposer une solution permettant de conserver un marquage à fort contraste sur le flanc d'un pneumatique, au cours du roulage de ce pneumatique.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « marquage » sur un flanc d'un pneumatique, on entend des indications sur ce flanc destinées à donner des informations techniques et légales ou à permettre aux consommateurs de distinguer l'origine du produit,

Par « texture », on entend un agencement organisé d'une pluralité d'éléments, tout ou partie des éléments de l'agencement étant la répétition d'un même élément de base, par exemple, un brin.

Par « brin », on entend un élément filiforme dont la hauteur est au moins égale à 2 fois le diamètre d'un disque de même surface qu'une section moyenne de ce brin.

Par « section moyenne » d'un brin, on entend la moyenne des sections mesurées à intervalles réguliers depuis la base du brin jusqu'au sommet de ce brin.

### RESUME DE L'INVENTION

L'invention concerne un pneumatique en matériau caoutchoutique comprenant un flanc et un marquage, Ce marquage est disposé dans un logement en creux dans le flanc. Le pneumatique comporte une texture comprenant une pluralité de brins répartis selon une densité au moins égale à cinq brins par millimètre carré (mm²), chaque brin ayant une section moyenne comprise entre 0,0007 mm² et 0,06 mm². La texture est un agencement organisé d'une pluralité d'éléments, tout ou partie des éléments de l'agencement étant la répétition d'un même élément de base. La texture entoure tout ou partie du marquage dans le logement. Les brins de la texture ont en retrait dans le logement, La texture n'est présente que dans une partie du logement autour du marquage. Le marquage fait protubérance à partir du fond du logement en affleurant le flanc, le sommet dudit marquage étant au même niveau que le niveau prolongeant le flanc au-dessus du logement.

La texture entourant le marquage, et formé par des brins apporte de nombreux avantages. D'une part, cette texture permet de « piéger » tout ou partie des rayons lumineux incidents qui rencontrent le flanc. Ceci permet de donner un aspect plus noir autour du marquage et en conséquence d'améliorer son contraste et donc sa visibilité par rapport au reste du flanc, D'autre part, cette texture particulière permet d'obtenir un toucher agréable sur le flanc, de type « velours ». Enfin, la texture utilisée présente des propriétés hydrophobes de sorte que l'évacuation de l'eau, de la poussière ou de la boue hors du logement dans lequel est présent le marquage, est facilitée. La visibilité du marquage, dans le temps, sur le flanc du pneumatique est ainsi maintenue.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'un flanc d'un pneumatique qui n'est pas selon l'invention et un marquage présent sur ce flanc ;
- la **figure 2** représente une vue en coupe selon l'axe X-X de la **figure 1****,** d'une texture entourant le marquage présent sur le flanc, selon un second mode de réalisation de l'invention ;
- la **figure 3** représente une vue schématique d'une texture entourant le marquage de la **figure 1** et comportant des brins ;

Dans la description qui va suivre, des éléments sensiblement identiques ou similaires seront désignés par des références identiques.

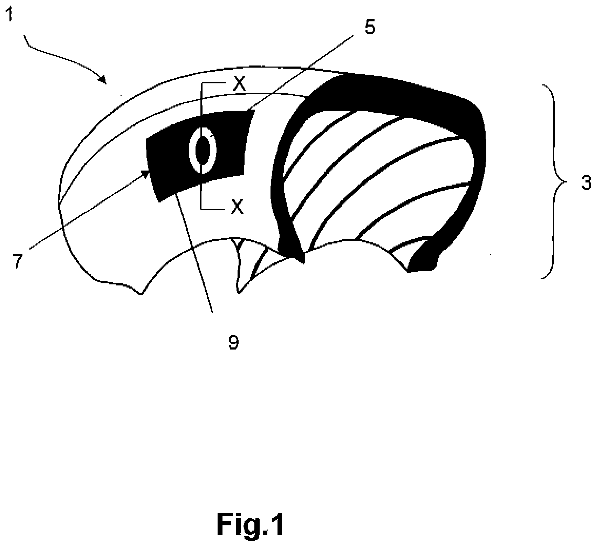

La **figure 1** représente un flanc 3 d'un pneumatique 1. Ce flanc de pneumatique comprend un marquage 5 disposé dans un logement 7. Ce logement 7 est placé en creux dans le flanc. Le pneumatique comprend en outre une texture 9 entourant le marquage 5 dans le logement. Dans l'exemple de la **figure 1****,** le marquage est entièrement entouré par la texture 9. En variante, ce marquage 5 peut être partiellement entouré par cette texture 9. On notera que la texture et le marquage sont ici bien distincts. En effet, la texture ne forme pas le marquage mais elle l'entoure pour améliorer la visibilité de ce marquage sur le flanc.

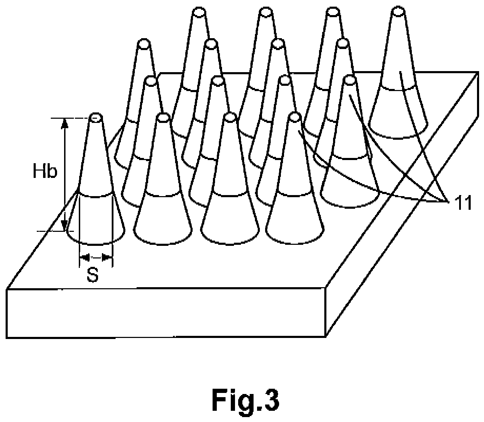

De plus, la texture 9 comporte une pluralité de brins 11, tels que représentés à la **figure 3****.** Dans cette figure, les brins 11 ont une forme globalement conique avec une section diminuant dans la hauteur Hb de ces brins. Plus particulièrement, la section moyenne de chaque brin, correspondant à la moyenne des sections S mesurées à intervalles réguliers depuis la base du brin, est comprise entre 0,0007 mm² et 0,06 mm². Dans la texture 9, les brins sont répartis selon une densité au moins égale à cinq brins par millimètre carré.

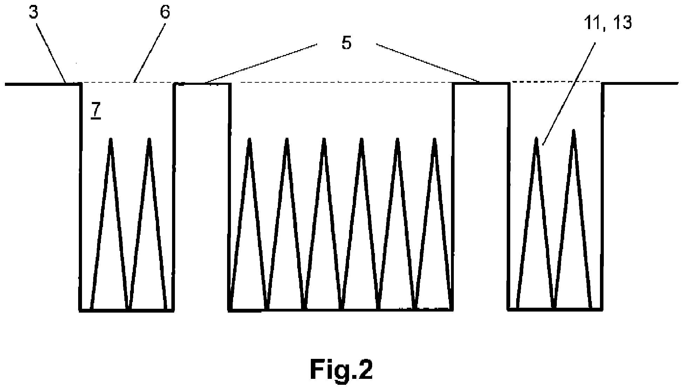

Dans une variante de réalisation visible à la **figure 2****,** les brins 11 de la texturesont en retrait dans le logement 7 du flanc 3, c'est-à-dire que les sommets de ces brins 11 sont en-dessous du niveau 6 prolongeant le flanc,

L'invention n'est pas limitée aux exemples décrits et représentés et diverses modifications peuvent y être apportées sans sortir de son cadre.

Sur la **figure 2****,** le marquage 5 est représenté comme faisant protubérance à partir du fond du logement 7 en affleurant le flanc 3.

En outre, le flanc du pneumatique peut comporter d'autres marquages ne présentant pas autour d'eux une texture telle que décrite dans l'invention.

De plus, on a représenté sur la **figure 1****,** la texture 9 comme remplissant totalement le logement 7. En variante, selon l'invention cette texture 9 n'est présente que dans une partie du logement 7, autour du marquage 5.

## Revendications

1. Pneumatique en matériau caoutchoutique comprenant un flanc (3) et un marquage (5), ce marquage (5) étant disposé dans un logement (7) en creux dans le flanc (3), ledit pneumatique comportant une texture (9), ladite texture étant un agencement organisé d'une pluralité d'éléments, tout ou partie des éléments de l'agencement étant la répétition d'un même élément de base, ladite texture comprenant une pluralité de brins (11) répartis selon une densité au moins égale à cinq brins par millimètre carré (mm²), chaque brin ayant une section moyenne comprise entre 0,0007 mm² et 0,06 mm² **caractérisé en ce que** la texture (9) entoure tout ou partie du marquage (5) dans le logement (7) **et en ce que** les brins de la textures ont en retrait dans le logement **et en ce que** la texture (9) n'est présente que dans une partie du logement (7), autour du marquage (5) et **en ce que** le marquage (5) fait protubérance à partir du fond du logement (7) en affleurant le flanc (3), le sommet dudit marquage étant au même niveau que le niveau (6) prolongeant le flanc (3) au-dessus du logement (7).

## Patentansprüche

1. Reifen aus Gummimaterial umfassend eine Flanke (3) und eine Markierung (5), wobei diese Markierung (5) in einer vertieften Aufnahme (7) in der Flanke (3) angeordnet ist, wobei der Reifen eine Textur (9) aufweist, wobei die Textur eine organisierte Anordnung einer Mehrzahl von Elementen ist, wobei alle oder ein Teil der Elemente der Anordnung die Wiederholung eines selben Grundelements ist, wobei die Textur eine Mehrzahl von Stielen (11) umfasst, die gemäß einer Dichte verteilt sind, die mindestens gleich fünf Stielen pro Quadratmillimeter (mm²) ist, wobei jeder Stiel einen mittleren Querschnitt zwischen 0,0007 mm² und 0,06 mm² aufweist, **dadurch gekennzeichnet, dass** die Textur (9) die Markierung (5) in der Aufnahme (7) vollständig oder teilweise umgibt, und dadurch, dass die Stiele der Texturen in der Aufnahme zurückgesetzt haben, und dadurch, dass die Textur (9) nur in einem Teil der Aufnahme (7) um die Markierung (5) herum vorhanden ist, und dadurch, dass die Markierung (5) vom Boden der Aufnahme (7) absteht, wobei sie bündig mit der Flanke (3) abschließt, wobei der Scheitel der Markierung auf derselben Ebene wie die Ebene (6) ist, welche die Flanke (3) über der Aufnahme (7) verlängert.

## Claims

1. Tyre made of rubber material comprising a sidewall (3) and a marking (5), this marking (5) being positioned in a housing (7) recessed into the sidewall (3), the said tyre comprising a texture (9), said texture (9) being an organized arrangement of a plurality of elements, all or part of the elements of the arrangement being repeats of one single basic element, said texture comprising a plurality of strands (11) distributed at a density at least equal to five strands per square millimetre (mm²), each strand having a mean cross section of between 0.0007 mm² and 0.06 mm² **characterized in that** the texture (9) surrounds all or part of the marking (5) in the housing (7) and **in that** the strands of the texture are set back in the housing and **in that** the texture 9 is present in just part of the housing 7, around the marking 5 and **in that** the strands of the texture end flush with the sidewall of the tyre (3), the tips of marking 5 lie at the same level as the level 6 extending the sidewall 3 above the housing 7.
